# EUROPÄISCHE PATENTSCHRIFT

(11) **EP 2 094 955 B1**
(45) Veröffentlichungstag und Bekanntmachung des Hinweises auf die Patenterteilung: **21.04.2010**
(21) Anmeldenummer: 07822382.3
(22) Anmeldetag: 08.11.2007
(51) Int. Cl.: F01N 9/00, F02D 41/02, F01N 3/023

(54) **VERFAHREN ZUR PRÜFUNG DER VOLLSTÄNDIGKEIT EINER REGENERATION EINES PARTIKELFILTERS IM ABGAS EINES VERBRENNUNGSMOTORS**
METHOD FOR CHECKING THE COMPLETENESS OF A REGENERATION OF A PARTICLE FILTER IN THE EXHAUST GAS OF AN INTERNAL COMBUSTION ENGINE
PROCÉDÉ DE VÉRIFICATION QUE LA RÉGÉNÉRATION D'UN FILTRE À PARTICULES DANS LES GAZ D'ÉCHAPPEMENT D'UN MOTEUR À COMBUSTION INTERNE EST TERMINÉE

(30) Priorität: 23.11.2006 DE 102006055237
(43) Veröffentlichungstag der Anmeldung: 02.09.2009
(73) Patentinhaber: Robert Bosch GmbH, 70442 Stuttgart (DE)
(72) Erfinder: HARNDORF, Horst, 34270 Schauenburg (DE); FUCHS, Christian, 70190 Stuttgart (DE)
(86) Internationale Anmeldenummer: PCT/EP2007/062080
(87) Internationale Veröffentlichungsnummer: WO 2008/061896

(56) Entgegenhaltungen:
- EP-A- 1 431 531
- EP-A- 1 517 026
- EP-A- 1 517 029
- DE-A1-102006 000 164

## Beschreibung

### Stand der Technik

Die Erfindung betrifft ein Verfahren nach dem Oberbegriff des Anspruchs 1, eine Verwendung eines solchen Verfahrens, sowie ein Steuergerät nach dem Oberbegriff des Anspruchs 6, wie es beispielhaft in der EP 1 517 026 gezeigt ist.

Ein solches Verfahren, eine solche Verwendung und ein solches Steuergerät ist bereits aus dem Serieneinsatz bei Personenkraftwagen mit Dieselmotoren bekannt. Partikelfilter stellen wirksame Mittel zur Reduktion der Emissionen von Ruß bei Verbrennungsmotoren, insbesondere bei Dieselmotoren, dar. Die im Abgas enthaltenen Rußpartikel lagern sich bei der Durchströmung des Partikelfilters im Partikelfilter ab. Mit zunehmender Rußbeladung des Partikelfilters steigt der Abgasgegendruck an. Als Folge wird der Wirkungsgrad des Verbrennungsmotors verschlechtert. Der Kraftstoffverbrauch steigt und das Fahrzeug beschleunigt schlechter. Um den negativen Einfluss der Rußbeladung zu begrenzen, muss der Partikelfilter von Zeit zu Zeit von den eingelagerten Rußpartikeln befreit werden, was auch als Regeneration bezeichnet wird. Die Regeneration erfolgt durch Verbrennen des im Partikelfilter eingelagerten Rußes mit Sauerstoff aus dem Abgas zu Kohlendioxid.

Die Verbrennung wird durch motorische Maßnahmen ausgelöst, die eine Erhöhung der Abgastemperatur bewirken. Dies wird durch Eingriffe in das Luftsystem des Verbrennungsmotors, zum Beispiel eine Androsselung, und/oder Eingriffe in den Einspritzverlauf erreicht. Die Regeneration beginnt, wenn die Abgastemperatur die Zündtemperatur des Rußes im Partikelfilter überschreitet.

Bei einem Kraftfahrzeug erfolgt eine solche Regeneration typischerweise in Abhängigkeit von der Beladung des Rußpartikelfilters mit Luft nach einer Fahrstrecke von cirka 300 bis 800 km. Die Beladung ist von den Ruß-Rohemissionen des Verbrennungsmotors und der Größe des Partikelfilters abhängig. Für die Erkennung der Beladung wird bei dem bekannten Gegenstand das Signal eines Differenzdrucksensors ausgewertet, der eine Druckdifferenz erfasst, die sich bei der Durchströmung des Partikelfilters einstellt. Unter der Voraussetzung eines konstanten Abgas-Volumenstroms nimmt die Druckdifferenz mit zunehmender Beladung des Partikelfilters mit Ruß zu. Die auf den Volumenstrom normierte Druckdifferenz stellt ein Maß für den Strömungswiderstand und damit für die Beladung des Partikelfilters mit Ruß dar. Das Steuergerät berechnet ein solches Maß in Abhängigkeit von Betriebsparametern des Verbrennungsmotors und steuert die Regeneration des Partikelfilters in Abhängigkeit von dem genannten Maß.

Eine Regeneration wird zum Beispiel dann eingeleitet, wenn die normierte Druckdifferenz einen ersten Schwellenwert überschreitet. Eine ausgelöste Regeneration dauert in der Regel einige Minuten und wird bei dem bekannten Gegenstand beendet, wenn der Quotient aus der Druckdifferenz und dem Abgas-Volumenstrom einen unteren Schwellenwert unterschreitet.

### Offenbarung der Erfindung

Für den korrekten Betrieb des Abgasreinigungssystems mit dem Partikelfilter ist es wichtig, dass die Regeneration zum richtigen Zeitpunkt erfolgt und möglichst vollständig durchgeführt wird. Wiederholt auftretende unvollständige Regenerationen sind aus den folgenden Gründen nachteilig: Der gute Wirkungsgrad moderner Verbrennungsmotoren, insbesondere moderner Dieselmotoren, geht mit entsprechend niedrigen Abgastemperaturen und Partikelfilter- Temperaturen einher. Jede Regeneration führt wegen der für die Rußverbrennung erforderlichen hohen Abgastemperatur zu einer Temperatur-Wechselbelastung, die den Partikelfilter altern lässt. Eine große Häufigkeit ausgelöster Regenerationen führt daher zu einer beschleunigten Alterung und damit zu einer unerwünschten Verkürzung der Lebensdauer des Partikelfilters. Außerdem erfordert jede Regeneration einen gewissen Kraftstoffaufwand zur Aufheizung der Abgasanlage. Unvollständige Regenerationen erhöhen den Kraftstoffverbrauch darüber hinaus noch weiter, weil sie zu einem im zeitlichen Mittel erhöhten Abgasgegendruck führen, der sich nachteilig auf den Wirkungsgrad des Verbrennungsmotors auswirkt.

Überraschenderweise hat sich gezeigt, dass die bekannte Auswertung des Quotienten aus Differenzdruck und Abgasmassenstrom beim Betrieb von Dieselmotoren mit weitgehend konstantem Abgasmassenstrom, also insbesondere bei einem Betrieb mit einem Abgasmassenstrom, der während und nach der Regeneration weitgehend konstant ist, nicht ausreicht, um eine unvollständige Regeneration des Partikelfilters zuverlässig zu erkennen.

Mit dem bekannten Verfahren gesteuerte Regenerationen werden bei diesen Verbrennungsmotoren insbesondere häufig zu früh beendet. Das hat zur Folge, dass der Partikelfilter entsprechend schnell wieder voll beladen ist, so dass ein neuer Regenerationsversuch ausgelöst wird. In der Summe ergibt sich damit eine unangemessen hohe Häufigkeit von Regenerationsversuchen, die zu den genannten Nachteilen einer vorschnellen Alterung und eines erhöhten Kraftstoffverbrauchs führt.

Nachteilig ist auch, dass bekannte Überwachungsfunktionen zur Überwachung der Vollständigkeit der Regenerationen auf einer Bewertung einer Häufigkeit ausgelöster Regenerationsversuche basieren. Bis zu einer Feststellung einer nicht ausreichenden Regeneration, die zu einem zu großen Wert der Häufigkeit führt, vergeht daher beim Stand der Technik eine vergleichsweise lange Zeit, in der der Verbrennungsmotor mit einem im Mittel zu hohen Abgasgegendruck und damit einem erhöhten Kraftstoffverbrauch betrieben wird.

Vor diesem Hintergrund besteht die Aufgabe der Erfindung in der Angabe einer verbesserten Erkennung einer unvollständigen Regeneration eines Partikelfilters, wobei sich die Angabe sowohl auf Verfahrensaspekte als auch auf Verwendungsaspekte und Vorrichtungsaspekte erstreckt.

Diese Aufgabe wird jeweils mit den Merkmalen der unabhängigen Ansprüche gelöst. Es hat sich gezeigt, dass die erfindungsgemäße Auswertung der Zeitableitung des erfassten Differenzdrucks zuverlässigere Aussagen über die Vollständigkeit einer Regeneration zulässt als die bekannte Bewertung des Differenzdrucks. Ein weiterer Vorteil besteht darin, dass die Erfindung bereits unmittelbar nach einer einzelnen Regeneration des Partikelfilters eine Bewertung des Regenerationserfolgs erlaubt. Dadurch können auch Systemfehler schneller entdeckt werden als bei dem bekannten Verfahren, das eine Häufigkeit von Regenerationsversuchen bewertet und daher mehrere Regenerationsversuche abwarten muss. Durch die schnellere Erkennung unzureichender Regenerationen kann schneller in die Steuerung der Regenerationen eingriffen werden. Die mit den zu häufig ausgelösten Regenerationen verbundenen Erhöhungen des Kraftstoffverbrauchs und des alterungsbedingten Verschleißes des Partikelfilters können damit vermieden oder zumindest verringert werden.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: einen Verbrennungsmotor, der eine Abgasanlage mit einem Partikelfilter aufweist;
- Fig. 2: ein Ausführungsbeispiel eines erfindungsgemäßen Verfahrens in Form eines Flussdiagramms;
- Fig. 3: einen zeitlichen Verlauf des Differenzdrucks über einem Partikelfilter nach einer vollständigen und nach einer unvollständigen Regeneration, und
- Fig. 4: Werte der Zeitableitung des Differenzdrucks in einer Auftragung über dem Regenerationserfolg.

### Ausführungsformen der Erfindung

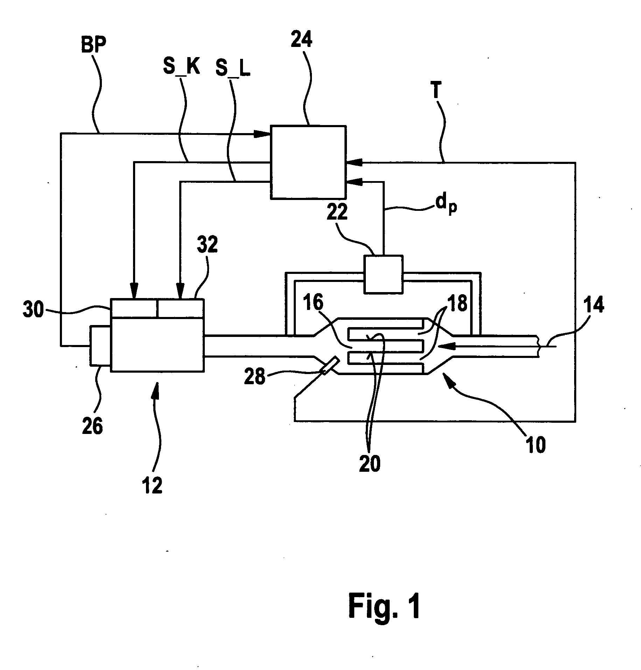

Die Figur 1 zeigt unter anderem einen Querschnitt durch einen Partikelfilter 10, der von links nach rechts vom Abgas eines Verbrennungsmotors 12 durchströmt wird. Der Partikelfilter 10 weist eine poröse Filterstruktur 14 auf, die für das Abgas durchlässig ist, im Abgas enthaltene Rußpartikel aber nicht oder nur zu einem kleinen Teil durchlässt. Die poröse Filterstruktur 14 weist in der Ausgestaltung der Figur 1 wechselseitig jeweils links oder rechts verschlossene Kanäle 16, 18 auf, die durch poröse Wände 20 voneinander getrennt sind. Um den Partikelfilter 10 zu passieren, muss das Abgas die porösen Wände 20 durchströmen. Dabei lagern sich im Abgas enthaltene Rußpartikel in Poren der Wände 20 ab, was diese allmählich verstopft und den Strömungswiderstand des Partikelfilters 10 erhöht.

Der Strömungswiderstand führt bei der Durchströmung des Partikelfilters 10 zu einem Druckabfall, der von einem Differenzdrucksensor 22 als Differenzdruck dp erfasst und an ein Steuergerät 24 übergeben wird. Im Folgenden werden sowohl der Differenzdruck als auch das Drucksignal mit dem gleichen Bezugszeichen dp bezeichnet. Das Steuergerät 24 bildet ein Maß für die Beladung des Partikelfilters 10 mit Ruß in Abhängigkeit von dem Drucksignal dp. Je nach Ausgestaltung kann das Drucksignal dp auch direkt als Maß für die Beladung verwendet werden, da die Druckdifferenz dp über dem Partikelfilter 10 monoton mit der Beladung des Partikelfilters 10 mit Ruß anwächst.

Bei dem Steuergerät 24 handelt es sich bevorzugt um ein Steuergerät, das Stellgrößen S_L und S_K für den Betrieb des Verbrennungsmotors 10 in Abhängigkeit vom Signal dp des Differenzdrucksensors 22 und Signalen BP, T weiterer Sensoren 26, 28 bildet. In den Signalen BP der Sensoren 26 bilden sich Betriebsparameter des Verbrennungsmotors 12 wie Drehzahl, Ansaugluftmasse, Ladedruck, Fahrerwunsch, Brennraumdruck, Verbrennungsgeräusch und so weiter ab, wobei diese Liste nicht abschließend gemeint ist und das Steuergerät 24 auch nicht Signale zu allen genannten Betriebsparametern verarbeiten muss. Der Sensor 28 erfasst eine Temperatur T vor oder in dem Partikelfilter 10. In einer bevorzugten Ausgestaltung dient diese Temperatur T als Istwert für eine Temperaturregelung, mit der die Partikelfiltertemperatur während einer Regeneration des Partikelfilters 10 oberhalb der Zündtemperatur des Rußes gehalten wird. Mit den Stellgrößen S_L greift das Steuergerät 24 auf ein Luftsystem 30 (dort zum Beispiel auf eine Drosselklappe oder ein Abgasrückführventil) und mit den Stellgrößen S_K auf ein Kraftstoffsystem 32 (dort zum Beispiel auf eine Injektoranordnung) des Verbrennungsmotors 12 ein.

Im Übrigen ist das Steuergerät 24 dazu eingerichtet, insbesondere dazu programmiert, einen Ablauf des erfindungsgemäßen Verfahrens oder einen Ablauf von einer oder mehrerer seiner Ausgestaltungen zu steuern.

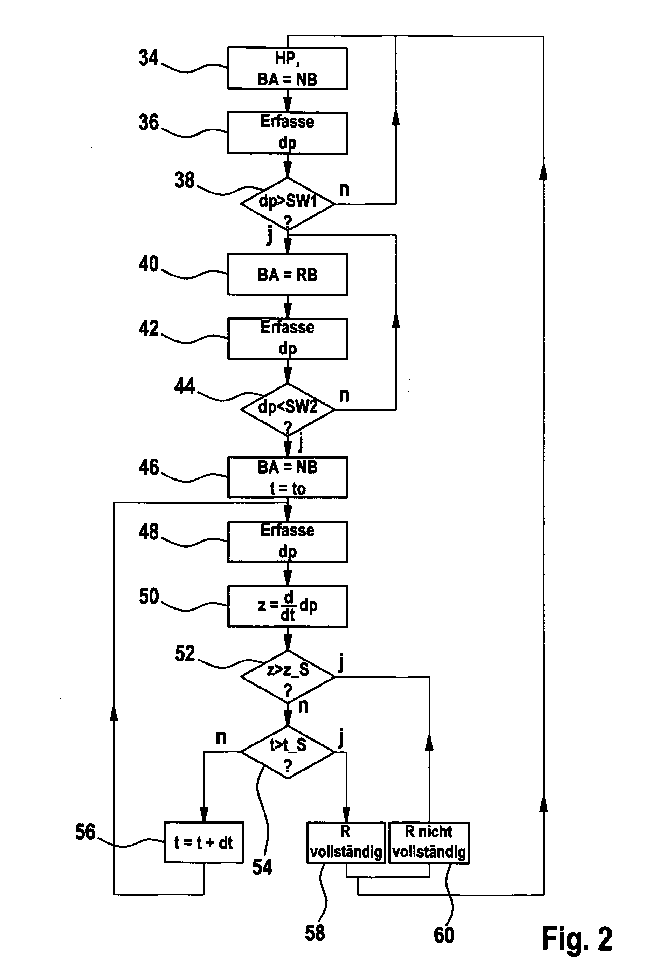

Figur 2 zeigt ein Ausführungsbeispiel eines erfindungsgemäßen Verfahrens in Form eines Flussdiagramms. Dabei repräsentiert der Schritt 34 ein Hauptprogramm HP zur Steuerung des Verbrennungsmotors 12, das im Steuergerät 24 abgearbeitet wird. Im Hauptprogramm des Schritts 34 wird der Verbrennungsmotor 12 in einem Normalbetrieb NB betrieben. Der Begriff des Normalbetriebs dient zu Abgrenzung vom Begriff des Regenerationsbetriebs und umfasst daher alle Betriebsarten BA, in denen keine Regeneration des Partikelfilters 10 stattfindet. Im Hauptprogramm des Schritts 34 gilt daher, dass die gewählte Betriebsart BA der Normalbetrieb NB ist (BA = NB).

Zur Überprüfung der Beladung des Partikelfilters 10 mit Ruß verzweigt das Hauptprogramm aus dem Schritt 34 wiederholt in einen Schritt 36, in dem der Differenzdruck dp über dem Partikelfilter 10, wie er vom Differenzdrucksensor 22 bereitgestellt wird, erfasst wird. Daran schließt sich ein Schritt 38 an, in dem der Wert der erfassten Druckdifferenz dp mit einem Schwellenwert SW1 verglichen wird. Solange dp den Schwellenwert SW1 nicht überschreitet, verzweigt das Programm zurück in den Schritt 34, in dem der Verbrennungsmotor 12 weiter im Normalbetrieb NB betrieben wird.

Überschreitet der Differenzdruck dp dagegen den Schwellenwert SW1, schließt sich an den Schritt 38 ein Schritt 40 an, in dem die Betriebsart BA des Verbrennungsmotors 12 vom Normalbetrieb NB in einen Regenerationsbetrieb RB umgeschaltet oder umgesteuert wird. In diesem Regenerationsbetrieb RB steuert das Steuergerät 24 den Verbrennungsmotor 12 so, dass die Temperatur seiner Abgase so weit erhöht wird, dass die Zündtemperatur des Rußes im Partikelfilter 10 erreicht oder überschritten wird. Dies erfolgt bevorzugt durch Änderung der Stellgrößen S_L für das Luftsystem 32 und/oder S_K für das Kraftstoffsystem 30.

Zur Erhöhung der Abgastemperatur kommen frühe, verbrennende oder angelagerte Nacheinspritzungen, eine Spätverschiebung der Haupteinspritzung und eine Ansaugluftdrosselung oder eine Erhöhung der Abgasrückführrate in Frage. Kombinationen dieser Maßnahmen sind ebenfalls möglich. Alternativ oder ergänzend kommen auch späte Nacheinspritzungen in Frage, die durch Oxidation des im Brennraum nicht mehr verbrannten Kraftstoffs in einem Oxidationskatalysator zu einer weiteren Abgastemperaturerhöhung führen.

Um auch bei ungünstigen Umgebungsbedingungen eine zuverlässige Regeneration des Partikelfilters 10 zu gewährleisten, wird die Abgastemperatur bei der Regeneration in einer bevorzugten Ausgestaltung geregelt. Als Eingangsgröße für die Regelung der Abgastemperatur dient das Temperatursignal des Temperatursensors 28, der vor dem Partikelfilter 10 oder im Partikelfilter 10 angeordnet ist. Alternativ oder ergänzend zur Erfassung einer Ist-Temperatur des Partikelfilters oder des Abgases kann eine solche Ist-Temperatur auch aus Betriebskenngrößen des Verbrennungsmotors 12 wie angesaugte Luftmenge und eingespritzte Kraftstoffmenge im Steuergerät 24 durch ein als Softwaremodul realisiertes Abgastemperaturmodell berechnet werden.

Im Anschluss an den Schritt 40 wird im Schritt 42 der beim Regenerationsbetrieb RB herrschende Differenzdruck dp über dem Partikelfilter 10 erfasst und in einem Schritt 44 mit einem zweiten Schwellenwert SW2 verglichen. Der zweite Schwellenwert SW2 ist kleiner als der erste Schwellenwert SW1. Er wird unterschritten, wenn der Partikelfilter 10 wieder weitgehend regeneriert ist. Zu Beginn der Regeneration wird der Differenzdruck dp jedoch noch größer als der Schwellenwert SW2 sein, so dass die Abfrage in Schritt 44 verneint wird und das Programm zurück zum Schritt 40 verzweigt, in dem der Regenerationsbetrieb RB fortgesetzt wird. Der Regenerationsbetrieb RB wird durch wiederholtes Durchlaufen der Schleife aus den Schritten 40, 42 und 44 so lange fortgesetzt, bis im Schritt 44 festgestellt wird, dass der Differenzdruck dp aufgrund einer fortschreitenden Regenerierung des Partikelfilters 10 den zweiten Schwellenwert SW2 unterschreitet.

In diesem Fall wird die genannte Schleife aus den Schritten 40, 42 und 44 verlassen und das Programm verzweigt in den Schritt 46, in dem die Betriebsart BA des Verbrennungsmotors 12 vom Regenerationsbetrieb RB in den Normalbetrieb NB zurückgesteuert wird. Dabei wird eine Zeit- oder Zählvariable t eines internen Zeitgebers des Steuergerätes 24 auf einen Startwert t0 gesetzt. Anschließend erfolgt im Schritt 48 erneut ein Erfassen des Differenzdrucks dp. Im Schritt 50 wird anschließend die Zeitableitung z = d/dt (dp) gebildet. Im Schritt 52 wird die Zeitableitung z und damit die Änderungsgeschwindigkeit des Differenzdrucks dp mit einem Schwellenwert z_S verglichen.

Bei einer weitgehend vollständigen Regeneration des Partikelfilters 10 wird der Differenzdruck dp nach der Regeneration nur vergleichsweise langsam wieder zunehmen. Die Steigung wird entsprechend flach und der Betrag der Zeitableitung z entsprechend klein sein, so dass der Schwellenwert z_S im Schritt 52 nicht überschritten wird. In diesem Fall schließt sich ein Schritt 54 an, in dem die Zeit-oder Zählvariable t mit einem Schwellenwert t_S verglichen wird. Dies wird zunächst noch nicht der Fall sein, so dass die Abfrage im Schritt 54 verneint wird und sich ein Schritt 56 anschließt, in dem der Wert der Zeit- oder Zählvariablen t um ein Inkrement dt erhöht wird.

Daran schließt sich eine erneute Erfassung des Differenzdrucks dp im Schritt 48 an. Die Schleife aus den Schritten 48, 50, 52, 54 und 56 wird dann wiederholt so lange durchlaufen, bis der Wert der Zeit- oder Zählvariablen t durch wiederholtes Inkrementieren den Schwellenwert t_S im Schritt 54 überschreitet. Das Programm verzweigt dann in den Schritt 58, in dem die Regeneration R als vollständig beurteilt wird. Im Ergebnis wird also eine nach einem Ende einer Regeneration gebildete Zeitableitung z mit einem Schwellenwert z_S verglichen und die Regeneration dann als erfolgreich beurteilt, wenn die Zeitableitung kleiner als ein vorgegebener Schwellenwert ist. Anschließend kehrt das Verfahren in das Hauptprogramm des Schritts 34 zurück. Die Zeitabfrage im Schritt 54 bewirkt, dass der Wert z der Steigung höchstens für die Länge einer Zeitspanne t_S überwacht wird. Der Vergleich mit dem Schwellenwert für die Steigung erfolgt daher nur innerhalb einer definierten Zeitspanne t_S nach dem Ende der Regeneration.

Ist die Regeneration R dagegen nicht ausreichend gewesen, steigt der Differenzdruck dp im anschließenden Normalbetrieb NB zunächst vergleichsweise schnell an. Dadurch ergibt sich im Schritt 50 ein vergleichsweise großer Wert der Ableitung z, so dass der Schwellenwert z_S im Schritt 52 bei einer hinreichend unvollständigen Regeneration R überschritten wird. Das Verfahren verzweigt dann aus dem Schritt 52 in den Schritt 60, in dem die Regeneration R als nicht vollständig beurteilt wird. Anders als beim Stand der Technik erfolgt diese Beurteilung gleich im Anschluss an eine einzelne Regeneration.

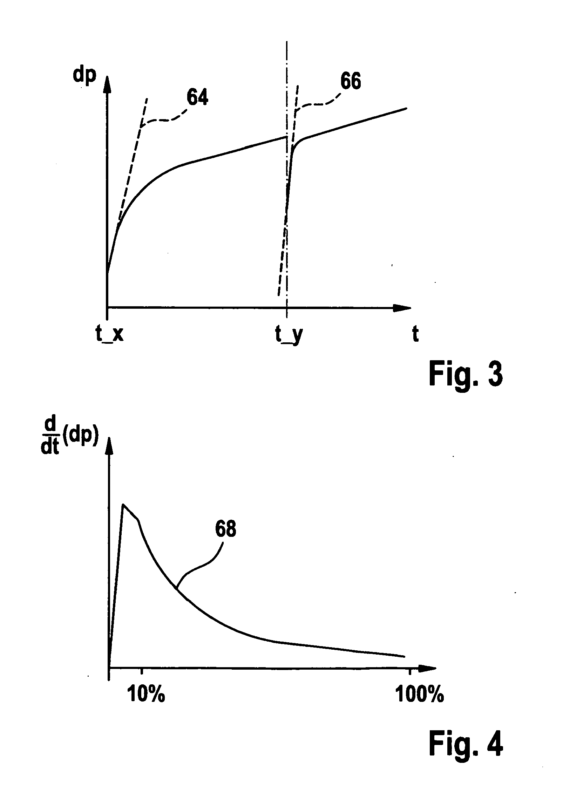

Figur 3 zeigt einen Verlauf des Differenzdrucks dp über der Zeit t. Zum Zeitpunkt t_x ist der Partikelfilter komplett von Rußpartikeln entladen und wird dann anschließend über eine Zeitspanne in der Größenordnung von Stunden beladen. Die Tangente 64 verdeutlicht dabei die anfängliche Steigung der dp(t)-Kurve, die dann im weiteren Verlauf weiter abnimmt. Zum Zeitpunkt t 1 wird der Partikelfilter regeneriert. Im Gegensatz zum Zeitpunkt t_x ist die Regeneration zum Zeitpunkt t_y nur unvollständig. So werden zum Zeitpunkt t_y nur etwa 10 % der eingelagerten Rußpartikel verbrannt. Wie der scharfe Einbruch im Druckverlauf zeigt, sinkt der Differenzdruck dp dabei jedoch bereits auf cirka die Hälfte des Wertes ab, den er vor der Regeneration, also kurz vor dem Zeitpunkt t_y besessen hat. Aufgrund dieser deutlichen Reaktion des Differenzdrucks würde man einen weitgehenden Regenerationserfolg vermuten. Das schnelle Wiederansteigen des Differenzdrucks bei der erneuten Beladung des Partikelfilters, die nach dem Zeitpunkt t_y stattfindet, ist jedoch für eine unvollständige Regeneration typisch. Das schnelle Wiederansteigen bildet sich auch in der Steigung der Tangente 66 ab. Aus einem Vergleich der Tangenten 66 und 64 ist qualitativ ersichtlich, dass die unvollständige Regeneration zum Zeitpunkt t_y mit einem größeren Wert der Tangentensteigung einhergeht als die vollständigere Regeneration zum Zeitpunkt t_x.

Fig. 4 verdeutlicht diesen Zusammenhang weiter. Die Kurve 68 gibt den Zusammenhang von Anfangssteigungen des Differenzdrucks dp, also Werten seiner Zeitableitung d/dt(dp) kurz nach einer Regeneration über Werten des Regenerationserfolgs in % dar, die längs der Abszisse dargestellt sind. Der Prozentwert gibt dabei den Anteil verbrannter Rußpartikel zu eingelagerten Rußpartikeln an. Dabei entspricht der Wert von 100 % einer vollständigen Regeneration. Bei einer Beladung mit 10 g Ruß und einer Verbrennung von 4 g Ruß bei einer Regeneration ergibt sich z.B. ein Wert von 40 % für den Regenerationserfolg.

Regenerationserfolge, die größer als etwa 10% sind, bilden sich reproduzierbar in einem monoton fallenden Verlauf der Kurve 68 ab und erlauben daher eine quantitative Bewertung des Regenerationserfolgs bereits bei nur einer erfolgten Regeneration. Es ist insbesondere deutlich erkennbar, dass die Zeitableitung d/dt(dp) im Fall stark unvollständiger Regenerationen deutlich höhere Werte besitzt als im Fall einer vollständigen Regeneration.

Es hat sich gezeigt, dass dieses Verfahren auch beim Betrieb von Dieselmotoren in stationären Betriebspunkten zuverlässige Beurteilungen des Regenerationserfolgs erlaubt. Eine bevorzugte Ausgestaltung sieht daher eine Verwendung des Verfahrens oder einer seiner Ausgestaltungen bei einem Verbrennungsmotor, insbesondere einem Dieselmotor, vor, der in stationären Betriebspunkten betrieben wird. Die Verwendung ist jedoch nicht auf Anwendungen mit lediglich stationär betriebenen Verbrennungsmotoren beschränkt. So sieht eine weitere bevorzugte Ausgestaltung vor, dass bei instationär betreibbaren Verbrennungsmotoren ein Maß für den Abgasmassenstrom des Verbrennungsmotors gebildet wird und dass nur solche Ergebnisse verwertet werden, die bei weitgehend konstantem Abgasmassenstrom erhalten worden sind.

## Patentansprüche

1. Verfahren zur Beurteilung einer Vollständigkeit einer Regeneration eines vom Abgas eines Verbrennungsmotors (12) durchströmten Partikelfilters (10), wobei eine Druckdifferenz (dp), die sich bei einer Durchströmung des Partikelfilters (10) über dem Partikelfilter (10) einstellt, erfasst und für die Beurteilung ausgewertet wird, **dadurch gekennzeichnet, dass** eine Zeitableitung (z) des erfassten Differenzdrucks (dp) gebildet wird und die Beurteilung der Vollständigkeit der Regeneration in Abhängigkeit von der Zeitableitung (z) erfolgt.

2. Verfahren nach Anspruch 1, **dadurch gekennzeichnet, dass** eine nach einem Ende einer Regeneration gebildete Zeitableitung (z) mit einem vorgegebenen Schwellenwert (z_S) verglichen wird und dass die Regeneration dann als erfolgreich beurteilt wird, wenn die Zeitableitung (z) kleiner als der vorgegebene Schwellenwert (z_S) ist.

3. Verfahren nach Anspruch 2, **dadurch gekennzeichnet, dass** der Vergleich mit dem Schwellenwert (z_S) nur innerhalb einer definierten Zeitspanne nach dem Ende der Regeneration erfolgt.

4. Verfahren nach einem der Ansprüche 1 bis 3, **dadurch gekennzeichnet, dass** ein Maß für den Abgasmassenstrom des Verbrennungsmotors (12) gebildet wird und dass nur solche Ergebnisse verwertet werden, die bei weitgehend konstantem Abgasmassenstrom erhalten worden sind.

5. Verwendung eines Verfahrens nach einem der Ansprüche 1 bis 3 bei einem Dieselmotor, der in stationären Betriebspunkten betrieben wird.

6. Steuergerät (24), das dazu eingerichtet ist, eine Vollständigkeit einer Regeneration eines vom Abgas eines Verbrennungsmotors (12) durchströmten Partikelfilters (10) zu beurteilen, wobei das Steuergerät (24) eine Druckdifferenz (dp), die sich bei einer Durchströmung des Partikelfilters (10) über dem Partikelfilter (10) einstellt, verarbeitet und für die Beurteilung auswertet, **dadurch gekennzeichnet, dass** das Steuergerät (24) dazu eingerichtet ist, eine Zeitableitung (z) des erfassten Differenzdrucks (dp) zu bilden und die Vollständigkeit der Regeneration in Abhängigkeit von der Zeitableitung (z) zu beurteilen.

7. Steuergerät (24) nach Anspruch 6, **dadurch gekennzeichnet, dass** es zur Steuerung des Ablaufs eines Verfahrens nach einem der Ansprüche 2 bis 5 eingerichtet ist.

## Claims

1. Method for assessing the completeness of a regeneration of a particle filter (10) through which the exhaust gas of an internal combustion engine (12) flows, with a pressure difference (dp) which arises across the particle filter (10) as a flow passes through the particle filter (10) being measured and evaluated for the assessment, **characterized in that** a time derivative (z) of the measured pressure difference (dp) is formed and the completeness of the regeneration is assessed as a function of the time derivative (z).

2. Method according to Claim 1, **characterized in that** a time derivative (z) which is formed after an end of a regeneration is compared with a predefined threshold value (z_S) and **in that** the regeneration is judged to be successful if the time derivative (z) is lower than the predefined threshold value (z_S).

3. Method according to Claim 2, **characterized in that** the comparison with the threshold value (z_S) takes place only within a defined time period after the end of the regeneration.

4. Method according to one of Claims 1 to 3, **characterized in that** a measure for the exhaust-gas mass flow of the internal combustion engine (12) is formed and **in that** only results which have been obtained with a substantially constant exhaust-gas mass flow are evaluated.

5. Use of a method according to one of Claims 1 to 3 in a diesel engine which is operated at steady-state operating points.

6. Control unit (24) which is set up to assess the completeness of a regeneration of a particle filter (10) through which the exhaust gas of an internal combustion engine (12) flows, with the control unit (24) processing, and evaluating for the assessment, a pressure difference (dp) which arises across the particle filter (10) as a flow passes through the particle filter (10), **characterized in that** the control unit (24) is set up to form a time derivative (z) of the measured pressure difference (dp) and to assess the completeness of the regeneration as a function of the time derivative (z).

7. Control unit (24) according to Claim 6, **characterized in that** said control unit is set up to control the progression of a method according to one of Claims 2 to 5.

## Revendications

1. Procédé pour déterminer la fin d'une régénération d'un filtre à particules (10) parcouru par les gaz d'échappement d'un moteur à combustion interne (12), une différence de pression (dp), qui s'établit sur le filtre à particules (10) lorsque le filtre à particules (10) est parcouru par un écoulement, étant détectée et analysée pour la détermination, **caractérisé en ce qu'**une dérivée dans le temps (z) de la pression différentielle détectée (dp) est formée et la détermination de la fin de la régénération s'effectue en fonction de la dérivée dans le temps (z).

2. Procédé selon la revendication 1, **caractérisé en ce que** l'on compare une dérivée dans le temps (z) formée après la fin d'une régénération avec une valeur seuil prédéfinie (z_S) et **en ce que** la régénération est alors déterminée comme réussie si la dérivée dans le temps (z) est inférieure à la valeur seuil prédéfinie (z_S).

3. Procédé selon la revendication 2, **caractérisé en ce que** la comparaison avec la valeur seuil prédéfinie (z_S) ne s'effectue qu'à l'intérieur d'un intervalle de temps défini après la fin de la régénération.

4. Procédé selon l'une quelconque des revendications 1 à 3, **caractérisé en ce qu'**une mesure pour le débit massique de gaz d'échappement du moteur à combustion interne (12) est formée et **en ce que** l'on n'utilise que les résultats qui ont été obtenus lorsque le débit massique de gaz d'échappement était essentiellement constant.

5. Utilisation d'un procédé selon l'une quelconque des revendications 1 à 3 dans un moteur diesel, qui fonctionne dans des points de fonctionnement stationnaires.

6. Appareil de commande (24), qui est prévu pour déterminer la fin d'une régénération d'un filtre à particules (10) parcouru par les gaz d'échappement d'un moteur à combustion interne (12), l'appareil de commande (24) traitant et analysant pour la détermination une différence de pression (dp), qui s'établit sur le filtre à particules (10) lorsque le filtre à particules (10) est parcouru par un écoulement, **caractérisé en ce que** l'appareil de commande (24) est prévu pour former une dérivée dans le temps (z) de la pression différentielle (dp) détectée et pour déterminer la fin de la régénération en fonction de la dérivée dans le temps (z).

7. Appareil de commande (24) selon la revendication 6, **caractérisé en ce qu'**il est prévu pour commander le déroulement d'un procédé selon l'une quelconque des revendications 2 à 5.
